# EUROPEAN PATENT SPECIFICATION

(11) **EP 4 454 813 B1**
(45) Date of publication and mention of the grant of the patent: **18.03.2026**
(21) Application number: 24171675.2
(22) Date of filing: 22.04.2024
(51) Int. Cl.: B24C 3/32, B05B 1/02, B24C 5/04, B24C 1/04, B08B 3/02, B08B 9/032, B05B 13/06, B05B 12/26, B24C 1/00, B24C 1/10

(54) **CAVITATION PROCESSING METHOD AND CAVITATION PROCESSING APPARATUS**
KAVITATIONSBEARBEITUNGSVERFAHREN UND KAVITATIONSBEARBEITUNGSGERÄT
MÉTHODE DE TRAITEMENT DE LA CAVITATION ET APPAREIL DE TRAITEMENT DE LA CAVITATION

(30) Priority: 28.04.2023 JP 2023074643
(43) Date of publication of application: 30.10.2024
(73) Proprietor: Sugino Machine Limited, Namerikawa City, Toyama 936-8577 (JP)
(72) Inventor: MATSUI, Taiki, Namerikawa City, Toyama, 9368577 (JP)
(74) Representative: Global IP Europe Patentanwaltskanzlei

(56) References cited:
- EP-A2- 1 127 945
- JP-A- 2007 050 492
- US-A1- 2023 029 286

## Description

### BACKGROUND

### 1. Technical Field

The present invention relates to a cavitation processing method and a cavitation processing apparatus for performing a cavitation process on a surface of a workpiece.

### 2. Description of the Background

Conventionally, a cavitation process is performed on a workpiece made of metal (Japanese Patent No. 6872929). In the cavitation process, a jet of a fluid containing a cavity (bubble) is caused to collide with the workpiece to process the surface of the workpiece by an impact force when the cavity collapses. The cavitation process provides effects such as peening for applying compressive residual stress to the surface of the workpiece, improvement of the slidability by forming a dimple shape on the surface of the workpiece, cleaning, peeling, cutting, and deburring.
JP 2007 050492 A relates to a hole surface machining method using a two layered jet water flow. The jet water flow is composed of a high-pressure water flow and a low-pressure water flow surrounding the high-pressure water flow and contains cavitation bubbles. A flow control jig having a reflection face for reflecting the high-pressure water flow is arranged inside the main hole of the workpiece.
US 2023 029286 A1 discloses a method according to the preamble of claim 1, an apparatus according to the preamble of claim 4 and a system for surface treating an internal surface of a part located in a tank including a fluid. The system comprises a nozzle submersed in the fluid and configured to generate a stream of cavitated fluid directed in a first direction and a deflection tool submersed in the fluid and comprising a deflection surface that redirects the stream of cavitated fluid from the first direction to a second direction, toward the internal surface of the part. The part is fixed on a fixture plate, wherein an opening of the part may be closed by the fixture plate.

### BRIEF SUMMARY

The workpieces to be performed on the cavitation process have various shapes and sizes. In order to perform an appropriate cavitation process, it is preferable to cause a jet to collide with the surface of the workpiece by an appropriate method according to the conditions of the workpiece.

An object of the present invention is to provide a cavitation processing method and a cavitation processing apparatus that perform a cavitation process on a surface inside a target hole of a workpiece.

An aspect of the present invention provides a cavitation processing method, including:
attaching a cap having a through hole to an inlet of a target hole of a workpiece, the target hole having the inlet and an opening;
closing the opening with a closing body, wherein the closing body includes an obstruction body configured to obstruct a flow of a jet of a processing liquid, the obstruction body located downstream from a processing region in the flow direction of the jet.
immersing the workpiece and a nozzle into the processing liquid;
ejecting the jet of the processing liquid from the nozzle located outside of the target hole to an inside of the target hole through the through hole such that a cavitation process is performed on the processing region that is located downstream of a non-processing region covered by the cap on an inner surface of the target hole; and
moving the obstruction body along a flow direction of the jet.

Another aspect of the present invention provides a cavitation processing apparatus configured to perform a cavitation process on a workpiece having a target hole having an inlet and an opening, the cavitation processing apparatus including: a cap attached to the inlet, the cap including a head portion and a through hole configured to penetrate the head portion; a closing body configured to close the opening, wherein the closing body includes an obstruction body located downstream from a processing region in a flow direction of a jet, the obstruction body configured to obstruct a flow of the jet; a nozzle located outside the target hole, the nozzle configured to eject the jet of processing liquid through the through hole to an inside of the target hole; and a tank configured to store the processing liquid for immersing the workpiece with the cap and the nozzle; the head portion having a male thread portion and the obstruction body being movable along the flow direction of the jet.

During the cavitation process, both the workpiece and the nozzle are immersed in the processing liquid stored in the tank. In the processing liquid, a jet of the processing liquid is ejected from the nozzle toward the workpiece. The processing liquid is, for example, water. The processing liquid may be a mixture of water and an abrasive. The abrasive material may be mixed with the processing liquid stored in the tank.

The workpiece is made of metal. The metal constituting the workpiece is, for example, an aluminum alloy, a magnesium alloy, titanium, a titanium alloy, or steel. The workpiece is, for example, a mechanical part. The mechanical part is, for example, a valve or a pipe joint. The target hole included in the workpiece may be a hole having no branch. The target hole may have a branch. The depth of the target hole is, for example, 50 mm to 300 mm. The target hole has an inner diameter of, for example, 10 mm to 40 mm. The nozzle has a diameter of, for example, 0.5 mm to 3 mm. The ejection pressure of the jet is, for example, 10 MPa to 80 MPa.

The closing body is, for example, a metal. The closing body may be fitted into an opening of the target hole. The closing body may have an external thread and may be screwed into an internal thread formed in the opening of the target hole. The closing body may have a small gap (e.g., 0.5 mm) with respect to the target hole. For example, when the sectional shape of the target hole is circular, the closing body may have a disk shape, a cylindrical column shape, or a cylindrical shape.

The cover body is, for example, a metal. The metal constituting the cover body is, for example, stainless steel. The cover body may be in contact with a non-processing region of the inner surface of the target hole. The cover body may have a slight gap (e.g., 0.5 mm) with respect to the target hole. For example, in a case where the sectional shape of the target hole is circular, the cover body may have a disk shape, a cylindrical column shape, or a cylindrical shape.

The through hole may be a hole that penetrates the cover body in the flow direction of the jet. For example, when the sectional shape of the target hole is circular, the sectional shape of the through hole may be circular, and the center axis of the through hole may coincide with the center axis of the target hole.

The region of the deep portion of the target hole that is the processing region is a region in the vicinity of the position where the target hole is closed. Specifically, it is a region 5 mm to 20 mm to the depth of the target hole from the position where the target hole is closed.

The obstruction body is, for example, a metal. The metal constituting the obstruction body is, for example, stainless steel. The obstruction body may be in contact with the inner surface of the target hole. The obstruction body may be spaced apart from the target hole.

The obstruction body may move from the upstream to the downstream in the flow direction of the jet. The obstruction body may move from the downstream to the upstream in the flow direction of the jet.

The closing body and the cover body may be integrally formed. The closing body may close the opening of the target hole and cover the inner surface of the target hole. When the region covered by the closing body is a non-processing region, the closing body also functions as a cover body. That is, the closing body may also function as the cover body.

The cover body and the obstruction body may be integrally formed. The cover body may cover the inner surface of the target hole and block the flow of the jet. At this time, the cover body also functions as an obstruction body. That is, the cover body may also function as the obstruction body.

The closing body and the obstruction body may be integrally formed. The closing body may close the opening of the target hole and block the flow of the jet. At this time, the closing body also functions as an obstruction body. That is, the closing body may also function as the obstruction body.

The closing body, the cover body, and the obstruction body may be integrally formed. The closing body may close the opening of the target hole, cover the inner surface of the target hole, and block the flow of the jet. At this time, the closing body also functions as a cover body and an obstruction body. That is, the closing body may serve as both the cover body and the obstruction body.

According to the present invention, the cavitation process can be performed on the inner surface of the target hole of the workpiece.

### BRIEF DESCRIPTION OF DRAWINGS

FIG. 1 shows a cavitation processing apparatus according to a first embodiment.
FIG. 2 is a longitudinal sectional view of a workpiece according to the first embodiment.
FIG. 3A is a longitudinal sectional view of a workpiece and a first cap according to a second embodiment.
FIG. 3B shows the workpiece with the first cap according to the second embodiment attached.
FIG. 4A is a longitudinal sectional view of a workpiece, the first cap, and a seventh cap according to a third embodiment.
FIG. 4B shows the workpiece with the first cap and the seventh cap according to the third embodiment attached.
FIG. 5A is a longitudinal sectional view of a workpiece and a second cap according to a fourth embodiment.
FIG. 5B shows the workpiece with the second cap according to the fourth embodiment attached.
FIG. 6A is a longitudinal sectional view of a workpiece, the second cap, and a third cap according to a fifth embodiment.
FIG. 6B shows the workpiece with the second cap and the third cap according to the fifth embodiment attached.
FIG. 7A is a longitudinal sectional view of a workpiece and a fourth cap according to a sixth embodiment.
FIG. 7B shows the workpiece with the fourth cap according to the sixth embodiment attached.
FIG. 8A is a longitudinal sectional view of a workpiece and a fifth cap according to a seventh embodiment.
FIG. 8B shows the workpiece with the fifth cap according to the seventh embodiment attached.
FIG. 9A is a longitudinal sectional view of a workpiece and a sixth cap according to an eighth embodiment.
FIG. 9B shows the workpiece with the sixth cap according to the eighth embodiment attached.

### DETAILED DESCRIPTION

### First Embodiment

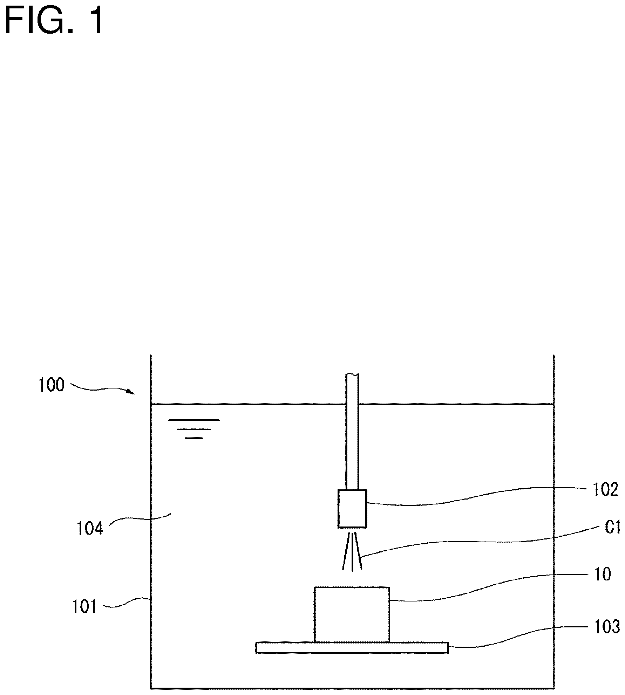

A cavitation processing apparatus used in a cavitation processing method according to a first embodiment will be described. As shown in FIG. 1, a cavitation processing apparatus 100 includes a tank 101, a nozzle 102, and a mounting table 103. The cavitation processing apparatus 100 performs a cavitation process on a workpiece 10.

The tank 101 stores a processing liquid 104. The processing liquid 104 is, for example, water. The tank 101 may include a device for circulating the stored processing liquid 104.

The nozzle 102 ejects a jet C1 of the processing liquid 104 supplied from a high-pressure fluid source (not shown). The jet C1 contains many cavities. The nozzle 102 ejects the jet C1 downward. The direction of ejection may be other than downward. The nozzle 102 is movable in three axial directions in a horizontal direction (front-rear direction and left-right direction) and a vertical direction. The ejection velocity (pressure) of the jet C1 and the three-axis movement of the nozzle 102 are controlled by a control device (not shown). The nozzle 102 has a nozzle diameter (inner diameter) of, for example, 0.5 mm to 3 mm.

The mounting table 103 places and fixes the workpiece 10. The mounting table 103 fixes the workpiece 10 with a fastener such as a bolt, a clamp, or the like, or fixes the workpiece 10 by clamping. The mounting table 103 is movable in the vertical direction. This allows the workpiece 10 to be taken in and out of the tank 101. The vertical movement of the mounting table 103 is controlled by the control device (not shown).

The cavitation processing apparatus 100 configured as described above can eject the jet C1 at any position of the workpiece 10 from any distance.

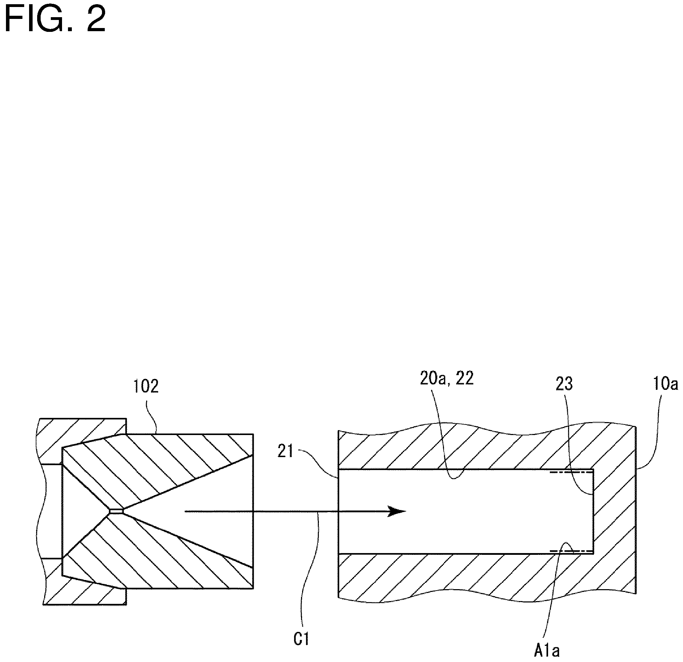

Next, the cavitation processing method of the present embodiment performed by the cavitation processing apparatus 100 will be described. As shown in FIG. 2, in the cavitation processing method of the present embodiment, a workpiece 10a has a single target hole 20a.

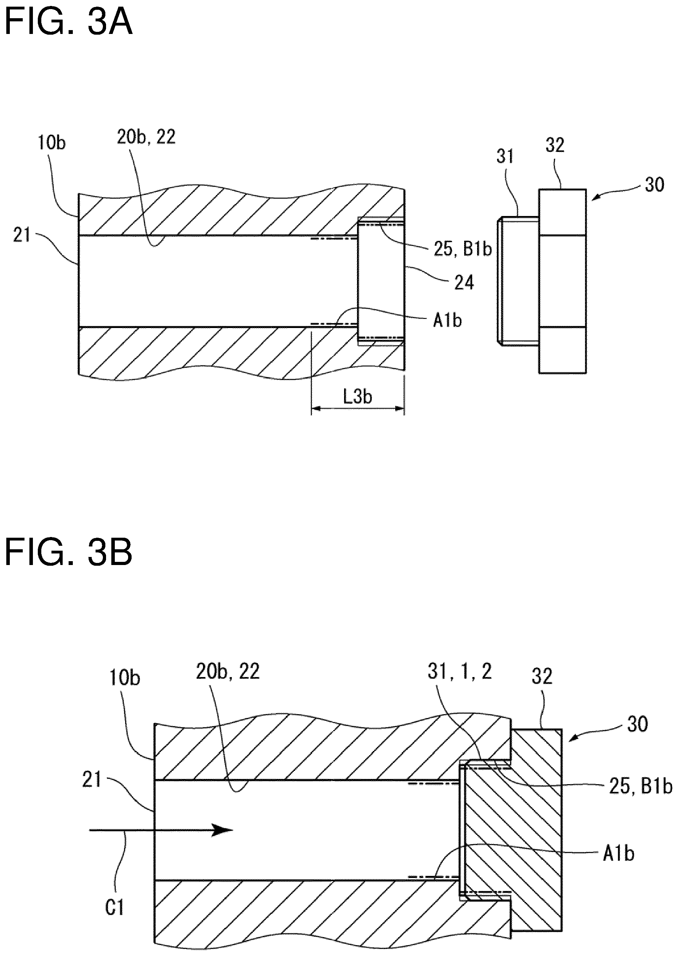

FIG. 2 is a sectional view taken through a center of the target hole 20a. The left side of the drawing is upward, and the right side of the drawing is downward. Hereinafter, the same applies to FIGs. 3A to 9B.

The workpiece 10a has the target hole 20a with a single inlet 21. The inlet 21 opens to one face of the workpiece 10a. The target hole 20a, which has a circular cross section, extends linearly from the inlet 21. The target hole 20a has a cylindrical side surface 22 and a circular bottom surface 23. The inlet 21 has an inner diameter smaller than an outer diameter of the nozzle 102. The nozzle 102 thus cannot be inserted into the target hole 20a. The inner diameter of the target hole 20a may be constant or may vary from the inlet 21 toward the bottom.

The target hole 20a has a depth of, for example, 50 mm to 100 mm. The inner diameter of the inlet 21 is, for example, 10 mm.

The workpiece 10a has a processing region A1a on an inner surface of the target hole 20a. The processing region A1a is a region on which the cavitation process is performed. The processing region A1a is arbitrarily set. In the workpiece 10a, the side surface 22 in the vicinity of the bottom surface 23, which is indicated by a dashed-dotted line in FIG. 2, is the processing region A1a. The vicinity of the bottom surface 23 is, for example, approximately 10 mm from the bottom surface 23.

The steps of the cavitation processing method of the present embodiment are as follows.

First, the processing liquid 104 is stored in the tank 101 as much as possible to immerse the workpiece 10a in a sufficient depth. The sufficient depth is, for example, 300 mm to 500 mm. At this time, the nozzle 102 and the mounting table 103 are positioned above the liquid level of the processing liquid 104.

Next, the workpiece 10a is mounted and fixed on the mounting table 103. The workpiece 10a is fixed in a position in which the inlet 21 of the target hole 20a faces upward.

Next, the mounting table 103 is moved downward to immerse the workpiece 10a (mounting table 103) in the processing liquid 104 stored in the tank 101.

Next, the nozzle 102 is moved horizontally so that the nozzle 102 faces the inlet 21 of the target hole 20a.

Next, the nozzle 102 is moved downward to immerse the nozzle 102 in the processing liquid 104 stored in the tank 101. The distance between the nozzle 102 and the processing region A1a of the workpiece 10a is set to a distance suitable for the cavitation process. The suitable distance for the cavitation process is, for example, a distance of about 50 to 200 times the diameter of the nozzle 102. If the nozzle 102 has an ejection hole diameter of 1 mm, the distance between the nozzle 102 and the processing region A1a of the workpiece 10a is preferably 50 mm to 200 mm.

Finally, a high pressure fluid source (not shown) is activated to eject the jet C1 from the nozzle 102. The jet C1 enters the inside of the target hole 20a through the inlet 21 to reach the processing region A1a.

The jet C1 performs the cavitation process on the processing region A1a. This provides an effect such as peening in which compressive residual stresses are applied to the processing region A1a. The nozzle 102 does not enter the target hole 20a. However, by ejecting the jet C1 from the outside of the target hole 20a to the target hole 20a which is a closed hole having no opening other than the single inlet 21, the cavitation process can be performed on the processing region A1a on the inner surface of the target hole 20a. The processing region A1a is in the vicinity of the bottom surface 23.

The order of the steps of the cavitation processing method of the present embodiment is not limited to the above-described order. For example, the processing liquid 104 may be stored in the tank 101 after the mounting table 103 or the nozzle 102 is moved. The nozzle 102 may be moved in the horizontal direction after being moved in the downward direction, or may be moved simultaneously in the horizontal direction and the downward direction.

When the workpiece 10a has a plurality of target holes 20a, after the cavitation process for one target hole 20a is completed, the nozzle 102 may be moved to perform cavitation process for another target hole 20a.

### Second Embodiment

The cavitation processing method according to a second embodiment will be described. Also in the present embodiment, the cavitation processing apparatus 100 substantially the same as that of the first embodiment is used.

As shown in FIG. 3A, in the cavitation processing method according to the present embodiment, a workpiece 10b has a single target hole 20b. The target hole 20b has a single inlet 21 and a single opening 24. The inlet 21 opens to a first face of the workpiece 10b. The opening 24 opens to a second face of the workpiece 10b. That is, the target hole 20b penetrates from the first face to the second face of the workpiece 10b. The target hole 20b, which has a circular cross-section, extends linearly from the inlet 21 to the opening 24. The target hole 20b has a cylindrical side surface 22. A female thread portion 25 is formed in the opening 24. The inlet 21 has an inner diameter smaller than the outer diameter of the nozzle 102 (not shown in FIG. 3A and thereafter). The nozzle 102 thus cannot be inserted into the target hole 20b. The inner diameter of the target hole 20b may be constant or may vary from the inlet 21 toward the opening 24.

The workpiece 10b has a non-processing region B1b on an inner surface of the target hole 20b. The non-processing region B1b is a region on which the cavitation process is not performed. The non-processing region B1b is arbitrarily set. In the workpiece 10b, a female thread portion 25 indicated by a two-dot chain line in FIG. 3A is the non-processing region B1b. This is because, when the cavitation process is performed on the female thread portion 25, the thread may be deformed and the performance as a screw may be impaired.

The workpiece 10b has a processing region A1b on the inner surface of the target hole 20b. In the workpiece 10b, a predetermined region of the side surface 22, which is indicated by a dashed-dotted line in FIG. 3A in the vicinity of the female thread portion 25, is the processing region A1b. The predetermined region is, for example, approximately 5 mm to 10 mm from the female thread portion 25.

As shown in FIGs. 3A and 3B, in the cavitation process of the present embodiment, a first cap 30 is attached to the opening 24 of the workpiece 10b in advance. The first cap 30, which has a bolt shape, includes a male thread portion (closing body, cover body) 31 and a head portion 32. The male thread portion 31 of the first cap 30 is screwed into the female thread portion 25 of the workpiece 10b. The opening 24 is then closed by the male thread portion 31, and the non-processing region B1b (female thread portion 25) is covered by the male thread portion 31. That is, the male thread portion 31 functions as not only a closing body 1 that closes the opening 24 but also a cover body 2 that covers the non-processing region B1b. In this manner, the cavitation process is performed on the workpiece 10b with the first cap 30 attached.

The step of the cavitation processing method of the present embodiment is substantially the same as the step of the cavitation processing method of the first embodiment, except that the first cap 30 is firstly attached to the workpiece 10b.

By the jet C1, the cavitation process is performed on the processing region A1b. By attaching the first cap 30 to the opening 24, the closing body 1 (the male thread portion 31) closes the opening 24, and the target hole 20b becomes a closed hole. By ejecting the jet C1 into the target hole 20b from the outside of the target hole 20b, the cavitation process is performed on the inner surface of the target hole 20b. The processing region A1b is in the vicinity of the closing body 1 (the male thread portion 31). The closing body 1 is a deep portion in which the target hole 20b is closed. As the non-processing region B1b is covered by the cover body 2 (the male thread portion 31), the jet C1 does not contact the non-processing region B1b. The cavitation process is thus not performed on the non-processing region B1b.

### Third Embodiment

The cavitation processing method according to a third embodiment will be described. Also in the present embodiment, the cavitation processing apparatus 100 substantially the same as that of the first embodiment is used.

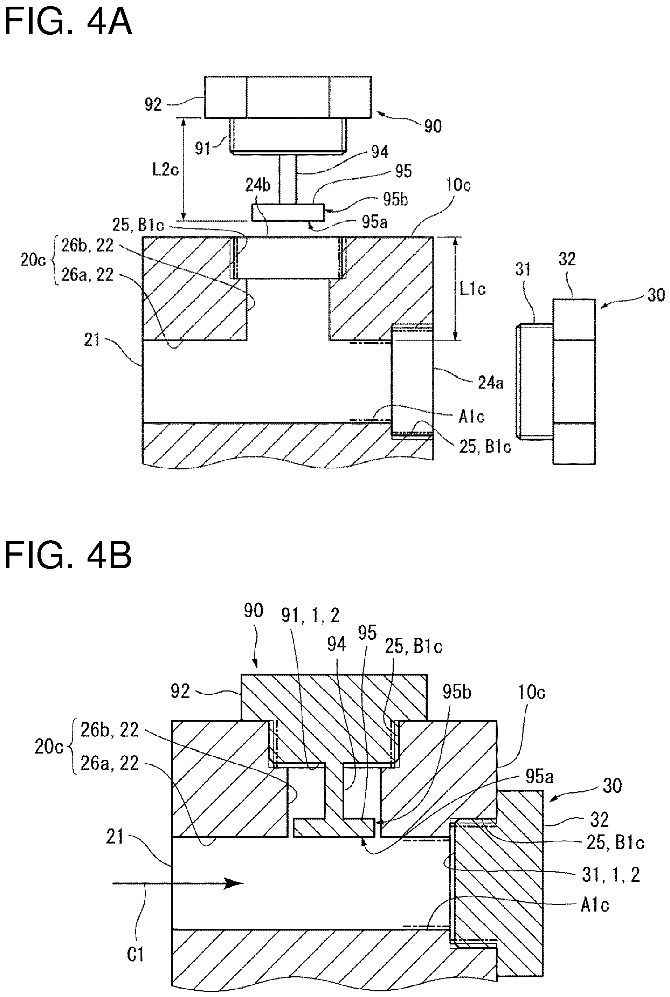

As shown in FIG. 4A, in the cavitation-processing method of the present embodiment, a workpiece 10c has a single target hole 20c. The target hole 20c has a single inlet 21 and two openings (a first opening 24a and a second opening 24b). The inlet 21 opens to a first face of the workpiece 10c. The first opening 24a opens to a second face of the workpiece 10c. The second opening 24b opens to a third face of the workpiece 10c. That is, the target hole 20c branches from the first face of the workpiece 10c and passes through the second face and the third face. The target hole 20c, which has a circular cross section, has a main flow path 26a and a branch flow path 26b. The main flow path 26a extends linearly from the inlet 21 to the first opening 24a. The branch flow path 26b branches from an intermediate portion of the main flow path 26a and extends linearly to the second opening 24b. That is, the target hole 20c has a T-shaped flow path. The target hole 20c is formed by combining two cylindrical surfaces 22. A female thread portion 25 is formed in the first opening 24a and the second opening 24b. The inlet 21 has an inner diameter smaller than an outer diameter of the nozzle 102. The nozzle 102 thus cannot be inserted into the target hole 20c. The inner diameter of the target hole 20c may be constant or vary from the inlet 21 toward the first opening 24a or the second opening 24b.

The workpiece 10c has a non-processing region B1c on an inner surface of the target hole 20c. In the workpiece 10c, the two female thread portions 25 indicated by the two-dot chain lines in FIG. 4A are the non-processing regions B1c.

The workpiece 10c has a processing region A1c on an inner surface of the target hole 20c. In the workpiece 10c, a predetermined region of the side surface 22, which is indicated by a dashed-dotted line in FIG. 4A and adjacent to the female thread portion 25 formed in the first opening 24a, is the processing region A1c. The processing region A1c is within a 5 mm to 10 mm range along the depth of the main flow path 26a of the target hole 20c.

As shown in FIGs. 4A and 4B, in the cavitation processing method of the present embodiment, a first cap 30 is attached to the first opening 24a and a seventh cap 90 is attached to the second opening 24b in advance. The seventh cap 90 includes a male thread portion (closing body, cover body) 91, a head portion 92, a support portion 94, and an obstruction portion 95. The male thread portion 91 and the head portion 92 are substantially the same as the male thread portion 31 and the head portion 32 of the first cap 30. The support portion 94, which is rod-shaped, extends from a distal end of the male thread portion 91 along the direction in which the branch flow path 26b extends. The obstruction portion 95, which has a disk shape, is disposed at a distal end of the support portion 94. The obstruction portion 95 has a distal end surface 95a and a lateral peripheral surface 95b. The obstruction portion 95 has an outer diameter slightly smaller than an inner diameter of the branch flow path 26b. A sealing member may be provided on the lateral peripheral surface 95b to close a gap between the obstruction portion 95 and the branch flow path 26b. The distal end surface 95a is an end surface of the obstruction portion 95 on the main flow path 26a side. The distal end surface 95a is a flat surface. A height L2c from the distal end surface 95a to the head portion 92 is substantially equal to a distance L1c from the second opening 24b to the side surface 22 of the main flow path 26a. The distal end surface 95a may be a curved surface. The support portion 94, the obstruction portion 95, and the male thread portion 91 may be integrated with each other. A center axis of the support portion 94 coincides with a center axis of the obstruction portion 95 and a center axis of the male thread portion 91.

As shown in FIG. 4B, the male thread portion 91 of the seventh cap 90 is screwed into the female thread portion 25 of the second opening 24b. The second opening 24b is then closed by the male thread portion 91, and the non-processing region B1c (female thread portion 25) is covered by the male thread portion 91. Further, the obstruction portion 95 is located at an end portion of the branch flow path 26b on the main flow path 26a side. When viewed from the main flow path 26a, the inlet of the branch flow path 26b is blocked by the obstruction portion 95. Preferably, when the seventh cap 90 is attached to the workpiece 10c, the distal end surface 95a is smoothly connected to the side surface 22 of the main flow path 26a. That is, the male thread portion 91 functions as the closing body 1 that closes the second opening 24b, and functions as the cover body 2 that covers the non-processing region B1c. In this way, the cavitation process is performed on the workpiece 10c to which the first cap 30 and the seventh cap 90 are attached.

The step of the cavitation processing method of the present embodiment is substantially the same as the step of the cavitation processing method of the first embodiment except that the first cap 30 is first attached to the first opening 24a and the seventh cap 90 is attached to the second opening 24b.

By the jet C1, the cavitation process is performed on the processing region A1c. By attaching the first cap 30 to the first opening 24 and attaching the seventh cap 90 to the second opening 24b, the closing body 1 (male thread portions 31, 91) closes the first opening 24a and the second opening 24b, and further, the obstruction portion 95 closes the inlet of the branch flow path 26b. The target hole 20c is then substantially a closed hole having no branch. That is, the target hole 20c is substantially the same as the target hole 20b of the second embodiment. The cavitation process is performed on the processing region A1c of an inner surface of the target hole 20c by ejecting the jet C1 to the target hole 20c from the outside of the target hole 20c which is a closed hole. The processing region A1c is in the vicinity of the closing body 1 (the male thread portion 31) of the first cap 30. The closing body 1 is a bottom portion of the closed target hole 20c. As the non-processing region B1c is covered by the cover body 2 (the male thread portions 31, 91), the jet C1 does not contact the non-processing region B1c. The cavitation process is thus not performed on the non-processing region B1c.

### Fourth Embodiment

The cavitation processing method of a fourth embodiment will be described. Also in the present embodiment, the cavitation processing apparatus 100 substantially the same as that of the first embodiment is used.

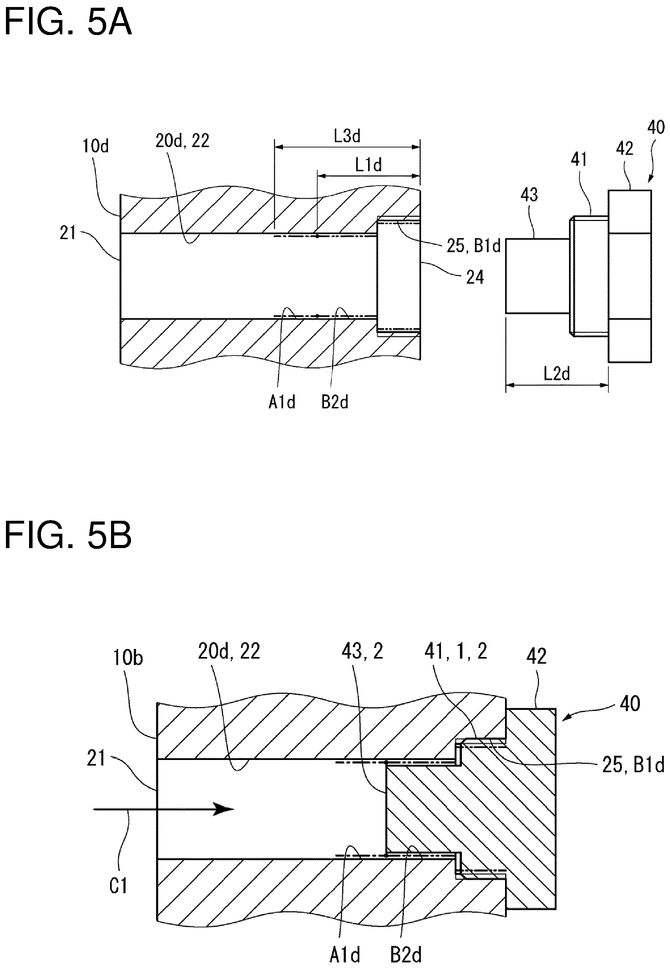

As shown in FIG. 5A, in the cavitation-processing method of the present embodiment, a workpiece 10d has a single target hole 20d. The target hole 20d is substantially the same as the target hole 20b of the second embodiment.

The workpiece 10d has a non-processing regions B1d, B2d on an inner surface of the target hole 20d. In the workpiece 10d, the female thread portion 25 indicated by a two-dot chain line in FIG. 5A on the side surface 22 is the non-processing region B1d, and a predetermined region adjacent to the female thread portion 25 is the non-processing region B2d. Here, the non-processing region B2d is a region where tolerances are specified for the inner diameter. This is because if the cavitation process is performed on a region where the tolerance is specified, there is a possibility that the accuracy of the dimension cannot be maintained.

The target hole 20d has a processing region A1d on the inner surface. In the workpiece 10d, a predetermined region of the side surface 22, which is indicated by a dashed-dotted line in FIG. 5A and adjacent to the non-processing region B2d, is the processing region A1d. The predetermined region is, for example, in a range of about 5 mm to 10 mm from the non-processing region B2d. A height L3d is defined as a distance from the opening 24 to the front end (the end toward the inlet 21) of the processing region A1d. Hereinafter, the direction toward the inlet 21 is referred to as a distal direction. In addition, with respect to the target holes 20a to 20g (described later), the height refers to the distance from the opening 24. In addition, with respect to the caps 30, 40, 50, and 60 and the movable plates 75 and 85 (described later), the height refers to a distance from the head to the tip (not including the head itself).

As shown in FIGs. 5A and 5B, in the cavitation processing method of the present embodiment, the second cap 40 is attached to the opening 24 in advance. The second cap 40 includes a male thread portion (closing body, cover body) 41, a head portion 42, and a cover portion (cover body) 43. The male thread portion 41 and the head portion 42 are substantially the same as the male thread portion 31 and the head portion 32 of the first cap 30. The cover portion 43, which has a cylindrical shape, is located at the distal end of the male thread portion 41. The cover portion 43 may be integrated with the male thread portion 41. The center axis of the cover portion 43 and the center axis of the male thread portion 41 coincide with each other. The cover portion 43 has an outer diameter slightly smaller than the inner diameter of the target hole 20d. The height L2d of the cover portion 43 is substantially equal to the height L1d of the non-processing region B2d from the opening 24. A sealing member may be provided on the peripheral surface of the cover portion 43 to close a gap between the cover portion 43 and the target hole 20d. When the male thread portion 41 of the second cap 40 is screwed into the female thread portion 25 of the workpiece 10d, the opening 24 is closed by the male thread portion 41, and the non-processing region B1d (female thread portion 25) is covered by the male thread portion 41. The peripheral surface of the cover portion 43 faces the non-processing region B2d with a slight gap therebetween. Thus, the cover portion 43 substantially covers the non-processing region B2d (region adjacent to the female thread portion 25). That is, the male thread portion 41 functions as the closing body 1 that closes the opening 24, and functions as the cover body 2 that covers the non-processing region B1d. The cover portion 43 functions as the cover body 2 that covers the non-processing region B2d. Note that the cover portion 43 and the non-processing region B2d may be in contact with each other. In this way, the cavitation processing method is performed on the workpiece 10d with the second cap 40.

The step of the cavitation processing method of the present embodiment is substantially the same as the step of the cavitation processing method of the first embodiment, except that the second cap 40 is firstly attached to the workpiece 10d.

By the jet C1, the cavitation process is performed on the processing region A1d. By attaching the second cap 40 to the opening 24, the closing body 1 (the male thread portion 41) closes the opening 24, and the target hole 20d becomes a closed hole. By ejecting the jet C1 into the target hole 20d from the outside of the target hole 20d, the cavitation process can be performed on the processing region A1d. The processing region A1d is in the vicinity of the cover body 2 (cover portion 43). The cover body 2 is a deep portion in which the target hole 20d is closed. As the non-processing regions B1d, B2d are covered by the cover body 2 (the male thread portion 41 and the cover portion 43), the jet C1 is not contacted. The cavitation process is thus not performed on the non-processing region B1d, B2d.

Note that, after the cavitation process of the second embodiment is performed on the workpiece 10b of the second embodiment, the cavitation process of the present embodiment may be performed by attaching the second cap 40 of the present embodiment instead of the first cap 30. For example, if the height L2d of the cover portion 43 is made to coincide with the height L3b of the processing region A1b of the second embodiment, the cavitation process can be performed on successively long regions. The workpiece 10c of the third embodiment is also substantially the same.

### Fifth Embodiment

The cavitation processing method of a fifth embodiment will be described. Also in the present embodiment, the cavitation processing apparatus 100 substantially the same as that of the first embodiment is used.

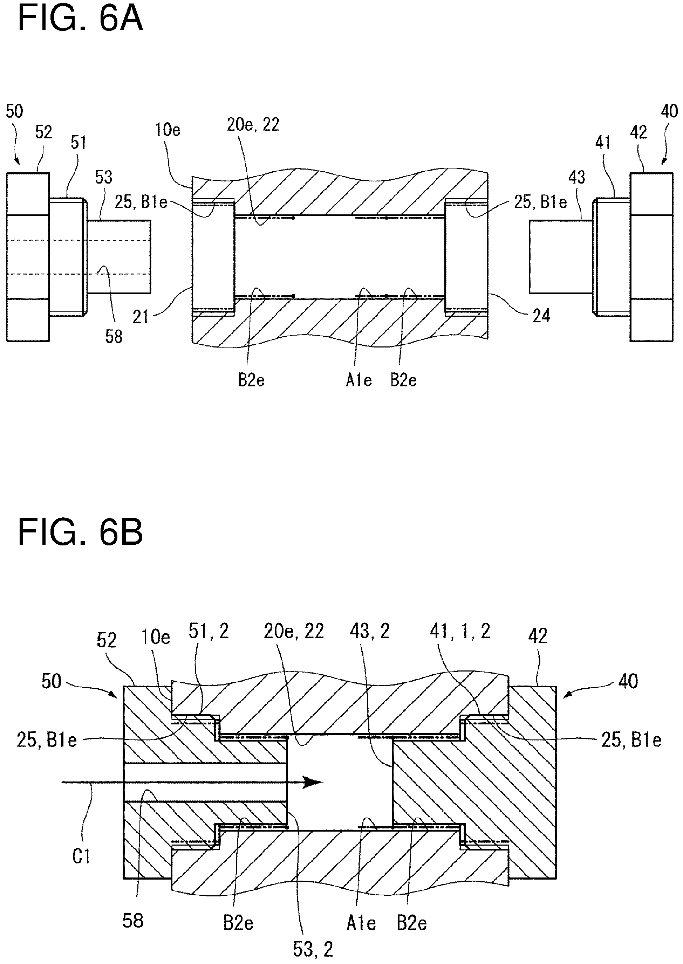

As shown in FIG. 6A, in the cavitation-processing method of the present embodiment, a workpiece 10e has a single target hole 20e. The target hole 20e is substantially the same as the target hole 20b of the second embodiment except that the female thread portion 25 is formed at the inlet 21 of the target hole 20e.

The workpiece 10e has non-processing regions B1e, B2e on an inner surface of the target hole 20e. In the workpiece 10e, as indicated by a two-dot chain line in FIG. 6A, both of the female thread portions 25 on the side surface 22 are the non-processing regions B1e. In addition, predetermined regions adjacent to both of the female thread portions 25 are the non-processing regions B2e. Here, the non-processing region B2e is a region where tolerances are specified for the inner diameter.

The target hole 20e has a processing region A1e on the inner surface. In the workpiece 10e, a predetermined region on the side surface 22, which is indicated by a dashed-dotted line in FIG. 6A and adjacent to the non-processing region B2e on the opening 24 side, is the processing region A1e. Here, the depth of the target hole 20e in the processing region A1e is 5 mm to 20 mm.

As shown in FIGs. 6A and 6B, in the cavitation processing method of the present embodiment, the second cap 40 is attached to the opening 24 of the workpiece 10e in advance. A third cap 50 is attached to the inlet of the workpiece 10e. The third cap 50 includes a male thread portion (cover body) 51, a head portion 52, and a cover portion (cover body) 53. The male thread portion 51, the head portion 52, and the cover portion 53 are substantially the same as the male thread portion 41, the head portion 42, and the cover portion 43 of the second cap 40. A through hole 58 is formed in the third cap 50. The through hole 58 penetrates from the head portion 52 to the cover portion 53. The through hole 58, which has a circular cross section, extends linearly. The center axis of the through hole 58 coincides with the center axis of the male thread portion 51, the head portion 52, and the cover portion 53. The inner diameter of the through hole 58 is, for example, 5 mm to 20 mm. Preferably, the inner diameter of the through hole 58 is 3 mm to 10 mm smaller than the outer diameter of the cover portion 53. When the male thread portion 51 of the third cap 50 is screwed into the female thread portion 25 of the inlet 21 of the workpiece 10e, the non-processing region B1e (female thread portion 25) is covered by the male thread portion 51. Further, the peripheral surface of the cover portion 53 faces the non-processing region B2e with a slight gap therebetween. That is, the cover portion 53 substantially covers the non-processing region B2e adjacent to the female thread portion 25. That is, the male thread portion 51 functions as the cover body 2 that covers the non-processing region B1e. The cover portion 53 functions as the cover body 2 that covers the non-processing region B2e. Note that the cover portion 53 and the non-processing region B2e may be in contact with each other. Due to the through hole 58, the third cap 50 does not block the inlet 21. In this way, the cavitation process is performed on the workpiece 10e with the second cap 40 and the third cap 50.

The cavitation processing method of the present embodiment is substantially the same as the step of the cavitation processing method of the first embodiment except that the second cap 40 and the third cap 50 are firstly attached to the workpiece 10e. However, the jet C1 ejected from the nozzle 102 passes through the through hole 58 of the third cap 50, enters the target hole 20e, and reaches the processing region A1e.

By the jet C1, the cavitation process is performed on the processing region A1e. By attaching the second cap 40 to the opening 24, the closing body 1 (the male thread portion 41) closes the opening 24. As a result, the target hole 20e becomes a closed hole. By ejecting the jet C1 into the target hole 20e from the outside of the target hole 20e, the cavitation process can be performed on the inner surface of the target hole 20e. The processing region A1e is in the vicinity of the cover body 2 (cover portion 43) of the second cap 40. The cover body 2 is a deep portion in which the target hole 20e is closed. As the non-processing regions B1e, B2e are covered by the cover body 2 (the male thread portions 41, 51 and the cover portions 43, 53), the jet C1 is not contacted. The cavitation process is not thus performed on the non-processing regions B1e, B2e.

### Sixth Embodiment

The cavitation processing method of a sixth embodiment will be described. Also in the present embodiment, the cavitation processing apparatus 100 substantially the same as that of the first embodiment is used.

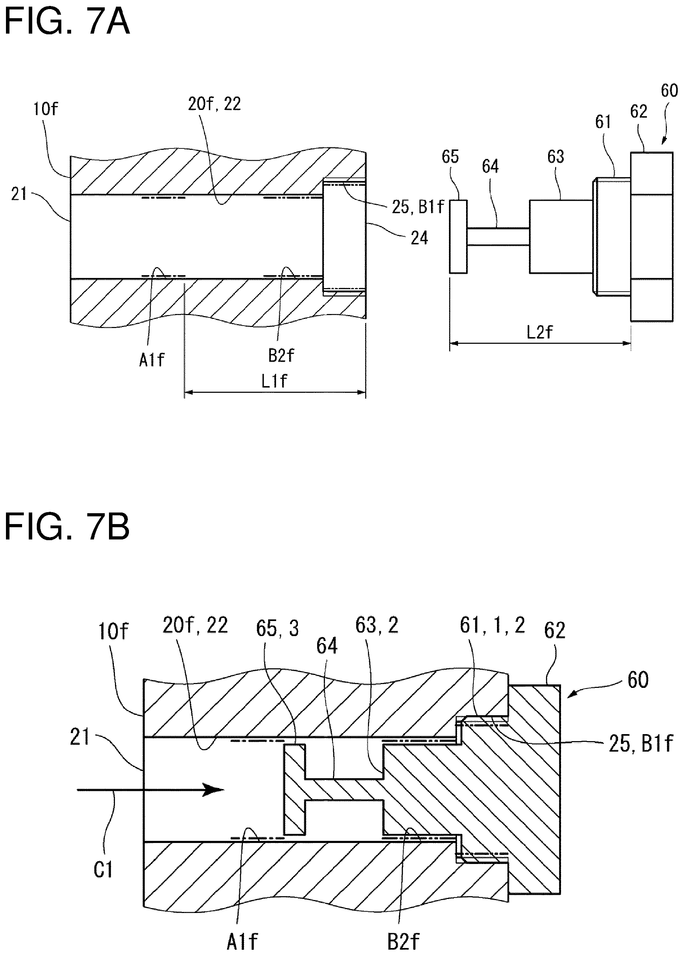

As shown in FIG. 7A, in the cavitation-processing method of the present embodiment, a workpiece 10f has a single target hole 20f. The target hole 20f is substantially the same as the target hole 20b of the second embodiment.

The target hole 20f has non-processing regions B1f, B2f on the inner surface. In the workpiece 10f, as indicated by the two-dot chain line in FIG. 7A, the female thread portion 25 on the side surface 22 is the non-processing region B1f, and a predetermined region adjacent to the female thread portion 25 is the non-processing region B2f. Here, the non-processing region B2f is a region where tolerances are specified for the inner diameter.

The target hole 20f has a processing region A1f on the inner surface. In the workpiece 10f, a predetermined region on the side surface 22, which is a position separated from the non-processing region B2f toward the inlet 21 and is indicated by a dashed-dotted line in FIG. 7A, is the processing region A1f. The height L1f to the base end of the processing region A1f is, for example, 50 mm to 70 mm. The width of the processing region A1f is, for example, about 10 mm.

As shown in FIGs. 7A and 7B, in the cavitation processing method of the present embodiment, a fourth cap 60 is attached to the opening 24 of the workpiece 10f in advance. The fourth cap 60 includes a male thread portion (closing body, cover body) 61, a head portion 62, a cover portion (cover body) 63, a support portion 64, and an obstruction portion (obstruction body) 65. The male thread portion 61, the head portion 62, and the cover portion 63 are substantially the same as the male thread portion 41, the head portion 42, and the cover portion 43 of the second cap 40. The support portion 64 and the obstruction portion 65 are substantially the same as the support portion 94 and the obstruction portion 95 of the seventh cap 90. However, the height L2f of the obstruction portion 65 is substantially the same as the height L1f. The support portion 64 extends from a distal end of the cover portion 63 in a direction in which the target hole 20f extends.

When the male thread portion 61 of the fourth cap 60 is screwed into the female thread portion 25 of the workpiece 10f, the opening 24 is closed by the male thread portion 61, and the non-processing region B1f (female thread portion 25) is covered by the male thread portion 61. The peripheral surface of the cover body 63 faces the non-processing region B2f with a slight gap therebetween. That is, the cover portion 63 substantially covers the non-processing region B2f adjacent to the female thread portion 25. In addition, the obstruction portion 65 is located adjacent to the processing region A1f and opposite side from the inlet 21. That is, the male thread portion 61 functions as the closing body 1 that closes the opening 24, and functions as the cover body 2 that covers the non-processing region B1f. The cover portion 63 functions as the cover body 2 that covers the non-processing region B2f. The obstruction portion 65 functions as the obstruction body 3 that obstructs the flow of the jet C1. Note that the cover portion 63 and the non-processing region B2f may be in contact with each other. The cover portion 63 may be omitted, and the support portion 64 may be disposed at the distal end of the male thread portion 61. Even in the absence of the cover portion 63, the jet C1 does not contact the non-processing region B2f due to the obstruction portion 65. In this case, the obstruction portion 65 functions as the cover body 2. In this manner, the cavitation process is performed on the workpiece 10f with the fourth cap 60.

The step of the cavitation processing method of the present embodiment is substantially the same as the step of the cavitation processing method of the first embodiment, except that the fourth cap 60 is firstly attached to the workpiece 10f.

By the jet C1, the cavitation process is performed on the processing region A1f. By attaching the fourth cap 60 to the opening 24, the closing body 1 (the male thread portion 61) closes the opening 24, and the target hole 20f becomes a closed hole. By ejecting the jet C1 into the target hole 20f from the outside of the target hole 20f, the cavitation process can be performed on the inner surface of the target hole 20f. As the flow of the jet C1 is obstructed by the obstruction body 3 (the obstruction portion 65), the cavitation process is performed on the processing region A1f on the inlet 21 side of the obstruction body 3. The processing region A1f is in the vicinity of the obstruction body 3. The obstruction body 3 is a deep portion in which the target hole 20f is blocked. As the non-processing regions B1f, B2f are covered with the cover body 2 (the male thread portion 61 and the cover portion 63), the jet C1 is not contacted. The cavitation process is thus not performed on the non-processing region B1f, B2f.

Note that, after the cavitation process of the fourth embodiment is performed on the workpiece 10d of the fourth embodiment, the cavitation process of the present embodiment may be performed by attaching the fourth cap 60 of the present embodiment instead of the second cap 40. For example, if the height L2f of the obstruction portion 65 of the fourth cap 60 matches the height L3d of the processing region A1d, the cavitation process can be performed continuously over a long region. The workpiece 10c and the workpiece 10e are also substantially the same.

In addition, after the cavitation process of the second embodiment is performed on the workpiece 10b of the second embodiment, the cavitation process of the present embodiment may be performed by attaching the fourth cap 60 of the present embodiment instead of the first cap 30. For example, if the height L2f of the obstruction portion 65 of the fourth cap 60 is set to be higher than the height L3b of the processing region A1b, the cavitation process can be performed on two regions separated from each other.

When applied to the workpiece 10c of the third embodiment, the vicinity of the intersection of the main flow path 26a and the branch flow path 26b can be a processing region A1f.

### Seventh Embodiment

The cavitation processing method of a seventh embodiment will be described. Also in the present embodiment, the cavitation processing apparatus 100 substantially the same as that of the first embodiment is used.

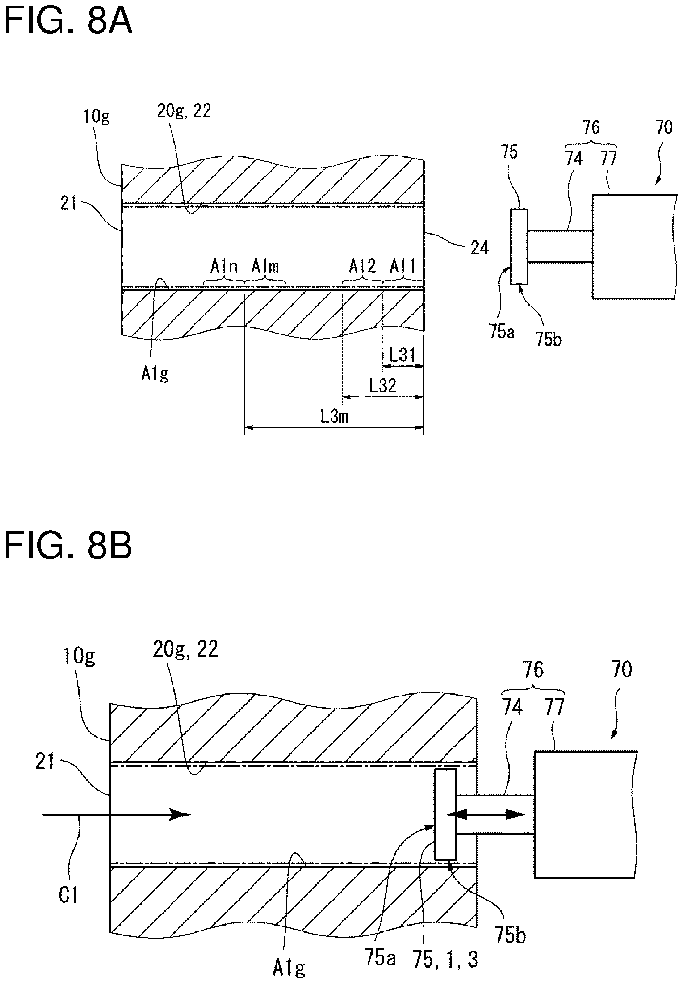

As shown in FIG. 8A, in the cavitation-processing method of the present embodiment, a workpiece 10g has a single target hole 20g. The target hole 20g has a single inlet 21 and a single opening 24. The inlet 21 opens to a first surface of the workpiece 10g. The opening 24 opens to a second surface of the workpiece 10g. That is, the target hole 20g penetrates from the first surface to the second surface of the workpiece 10g. The target hole 20g, which has a circular cross-section, extends linearly from the inlet 21 to the opening 24. The target hole 20g has a cylindrical side surface 22. The inlet 21 has an inner diameter smaller than the outer diameter of the nozzle 102. The nozzle 102 thus cannot be inserted into the target hole 20g.

The workpiece 10g has a processing region A1g on the inner surface of the target hole 20g. In the workpiece 10g, as indicated by the dashed-dotted line in FIG. 8A, the entire side surface 22 becomes the processing region A1g.

As shown in FIGs. 8A and 8B, in the cavitation-processing method of the present embodiment, a fifth cap 70 is attached to the opening 24 of the workpiece 10g. The fifth cap 70 includes a movable plate 75 and a drive device 76. The movable plate (closing body, obstruction body) 75 has a disk shape. The movable plate 75 has a distal end surface 75a and a side peripheral surface 75b. The movable plate 75 has an outer diameter slightly smaller than the inner diameter of the target hole 20g. A sealing member may be provided on the side peripheral surface 75b to close a gap between the movable plate 75 and the target hole 20g. The drive device 76 moves the movable plate 75 along the flow direction of the jet C1 (the center axial direction of the target hole 20g). The drive device 76 is a fluid cylinder device. The fluid cylinder is, for example, an air cylinder or a hydraulic cylinder. The drive device 76 includes a cylinder body 77 and a rod 74. The cylinder body 77 has a cylindrical shape. The rod 74, which has a rod shape, moves forward and backward with respect to the cylinder body 77. The distal end of the rod 74 is connected to the movable plate 75. The operation of the drive device 76 is controlled by a control device (not shown).

The drive device 76 positions the movable plate 75 in the opening 24 to be inserted into the target hole 20g. The opening 24 is thus closed by the movable plate 75. There is a slight gap between the side peripheral surface 75b of the movable plate 75 and the side surface 22 of the target hole 20g, but such a state is also included as a closed state. That is, the target hole 20g is substantially closed by the movable plate 75. The movable plate 75 is located adjacent to the processing region A1g and opposite from the inlet 21. That is, the movable plate 75 functions as the closing body 1 that closes the opening 24, and functions as the obstruction body 3 that obstructs the flow of the jet C1. In this manner, the cavitation process is performed on the workpiece 10g with the fifth cap 70.

The step of the cavitation processing method of the present embodiment is substantially the same as the step of the cavitation processing method of the first embodiment except that the fifth cap 70 is firstly attached to the workpiece 10g and the movable plate 75 is moved by the drive device 76.

First, the drive device 76 positions the movable plate 75 at the end portion of the opening 24. The nozzle 102 then ejects the jet C1. At this time, the flow of the jet C1 is obstructed by the obstruction body 3 (the movable plate 75). Then, the cavitation process is performed on the region A11 in the vicinity of the obstruction body 3 on the side of the inlet 21. The region A11 is in the vicinity of the obstruction body 3. The height of the region A11 is referred to as L31.

Then, the drive device 76 moves the movable plate 75 so that the distal end surface 75a is positioned at the height L31. Then, the cavitation process is performed on the region A12 adjacent to the region A11. As described above, the distal end surface 75a of the movable plate 75 is sequentially moved to the height L3m of the cavitated region A1m. As a result, the cavitation process can be performed on the consecutive regions A11 to A1n. Here, m and n are natural numbers, and n = m + 1. Finally, the drive device 76 moves the movable plate 75 from the end of the opening 24 to the vicinity of the end of the inlet 21.

The obstruction body 3 is a deep portion in which the target hole 20g is blocked. As the obstruction body 3 moves while performing the cavitation process, the region where the cavitation process is performed also moves. As the obstruction body 3 moves from the opening 24 to the inlet 21, the cavitation process is performed on the entire side surface 22 of the target hole 20g. As a result, the entire side surface 22 of the target hole 20g becomes the processing region A1g.

It should be noted that, although it is not necessary to prohibit the cavitation process, when there is a region in which the cavitation process is unnecessary in a part of the target hole 20g, when the cavitation process is performed, the drive device 72 may move the movable plate 75 by skipping the region in which the cavitation process is unnecessary.

The drive device 76 may continuously move the movable plate 75 from the opening 24 to the vicinity of the inlet 21.

By the jet C1, the cavitation process is performed on the processing region A1g. By attaching the fifth cap 70 to the opening 24, the closing body 1 (the movable plate 75) closes the opening 24, and the target hole 20g becomes a closed hole. By ejecting the jet C1 into the target hole 20g from the outside of the target hole A1g, the cavitation process can be performed on the inner surface of the target hole 20g.

In the cavitation process, the nozzle offset distance between the nozzle 102 and the processing region A1g (the distance from the nozzle 102 to the obstruction body 3) has an appropriate distance. If the amount of movement of the obstruction body 3 is large, it may fall outside the range of an appropriate distance. In this case, the nozzle 102 may also be moved so that the nozzle offset distance becomes an appropriate distance.

### Eighth Embodiment

The cavitation processing method of an eighth embodiment will be described. Also in the present embodiment, the cavitation processing apparatus 100 substantially the same as that of the first embodiment is used.

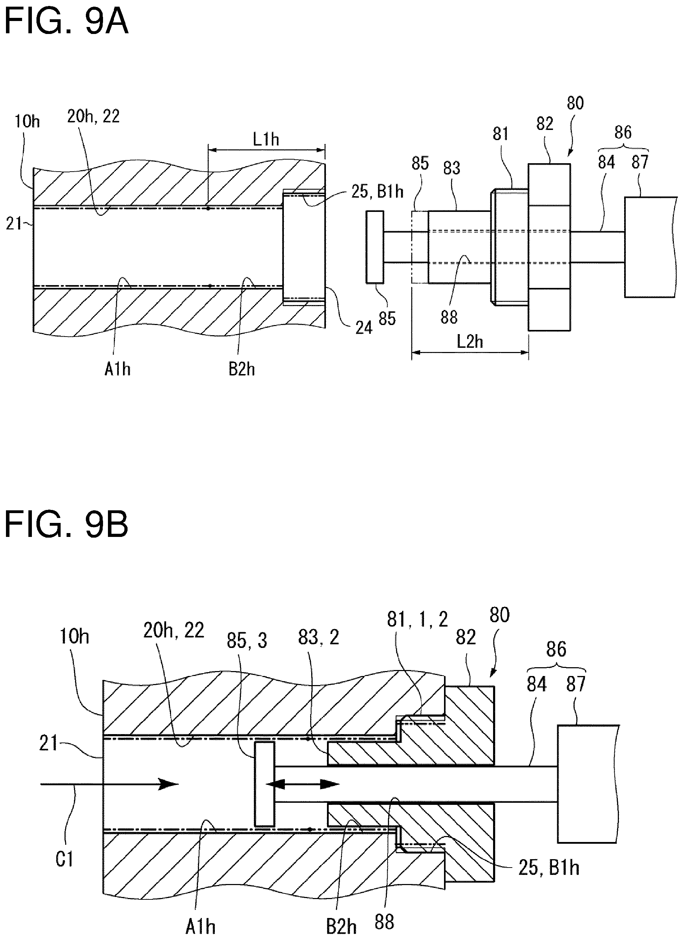

As shown in FIG. 9A, in the cavitation processing method of the present embodiment, a workpiece 10h has a single target hole 20h. The target hole 20h is substantially the same as the target hole 20b of the second embodiment.

The workpiece 10h has non-processing regions B1h, B2h on the inner surface of the target hole 20h. In the workpiece 10h, as indicated by the two-dot chain line in FIG. 9A, the female thread portion 25 of the side surface 22 is the non-processing region B1h. A predetermined region adjacent to the female thread portion 25 is a non-processing region B2h. Here, the non-processing region B2h is a region where tolerances are specified for the inner diameter.

The target hole 20h has a processing region A1h on the inner surface. In the workpiece 10h, as indicated by the dashed-dotted line in FIG. 9A, the entire side surface 22 other than the non-processing regions B1h, B2h is the processing region A1h.

As shown in FIG. 9B, in the cavitation processing method of the present embodiment, a sixth cap 80 is attached to the opening 24 of the workpiece 10h. The sixth cap 80 includes a male thread portion (closing body, cover body) 81, a head portion 82, a cover portion (cover body) 83, a movable plate (obstruction body) 85, and a drive device 86. The sixth cap 80 is formed with a through hole 88. The male thread portion 81, the head portion 82, the cover portion 83, and the through hole 88 are substantially the same as the male thread portion 51, the head portion 52, the cover portion 53, and the through hole 58 of the third cap 50. The movable plate 85 and the drive device 86 are substantially the same as the movable plate 75 and the drive device 76 of the fifth cap 70. That is, the drive device 86 includes a cylinder body 87 and a rod 84. The rod 84 passes through the through hole 88. The rod 84 has an outer diameter slightly smaller than the inner diameter of the through hole 88. The movable plate 85 is located toward the cover body 83. The cylinder body 87 is located toward the head portion 82. The sum L2h of the thickness of the movable plate 85, the width of the cover portion 83, and the width of the male thread portion 81 is substantially the same as the height L1h of the non-processing region B2h. Here, the height L1h of the non-processing region B2h is the length from the end of the non-processing region B2h on the inlet 21 side to the opening 24 (see FIG. 9A).

With the male thread portion 81, the head portion 82, and the cover portion 83 fixed, the drive device 86 moves only the movable plate 85. When the male thread portion 81 of the sixth cap 80 is screwed into the female thread portion 25 of the workpiece 10h, the opening 24 is closed by the male thread portion 81, and the non-processing region B1h (female thread portion 25) is covered by the male thread portion 81. The peripheral surface of the cover portion 83 faces the non-processing region B2h with a slight gap therebetween. That is, the cover portion 83 substantially covers the non-processing region B2h adjacent to the female thread portion 25. Further, the movable plate 85 is located adjacent to the processing region A1h and opposite from the inlet 21. That is, the male thread portion 81 functions as the closing body 1 that closes the opening 24, and functions as the cover body 2 that covers the non-processing region B1h. The cover portion 83 functions as a cover body 2 that covers the non-processing region B2h. The movable plate 85 functions as an obstruction body 3 that obstructs the flow of the jet C1.

The cover portion 83 and the non-processing region B2h may be in contact with each other. The cover portion 83 may be omitted. Even without the cover portion 83, the jet C1 does not contact the non-processing region B2h due to the movable plate 85. In this case, the movable plate 85 functions as the cover body 2. In this manner, the cavitation process is performed on the workpiece 10h with the sixth cap 80.

The step of the cavitation processing method of the present embodiment is substantially the same as the step of the cavitation processing method of the seventh embodiment.

By the jet C1, the cavitation process is performed on the processing region A1h. By attaching the sixth cap 80 to the opening 24, the closing body 1 (the male thread portion 81) closes the opening 24, and the target hole 20h becomes a closed hole. The jet C1 is ejected from the outside of the target hole 20h to the target hole 20h. Accordingly, the cavitation process can be performed on the processing region A1h on the inner surface of the target hole 20h. As the flow of the jet C1 is obstructed by the obstruction body 3 (the movable plate 85), the cavitation process is performed on the processing region A1h of the inlet 21 side of the obstruction body 3. The processing region A1h is in the vicinity of the obstruction body 3. The obstruction body 3 is a deep portion in which the target hole 20h is blocked.

As the obstruction body 3 moves while the cavitation process is performed, the region where the cavitation process is performed also moves. As the obstruction body 3 moves from the position adjacent to the processing region A1h and opposite from the inlet 21, to the inlet 21, the cavitation process is performed on the entire side surface 22 other than the non-processing regions B1h, B2h. As a result, the entire side surface 22 other than the non-processing regions B1h, B2h becomes the processing region A1h. As the non-processing regions B1h, B2h are covered by the cover body 2 (the male thread portion 81 and the cover portion 83), the jet C1 is not contacted. The cavitation process is not thus performed on the non-processing region B1h, B2h.

When there is a female thread portion or a non-processing region near the inlet 21 of the target hole 20h, the cavitation process is performed with the third cap 50 attached to the inlet 21.

### Reference Signs List

1 Closing body
2 Cover body
3 Obstruction body
10, 10a, 10b, 10c, 10d, 10e, 10f, 10g, 10h Workpiece
20, 20a, 20b, 20c, 20d, 20e, 20f, 20g, 20h Target hole
21 Inlet
24 Opening
58 Through hole
102 Nozzle
A1a, A1b, A1c, A1d, A1e, A1f, A1g, A1h Processing region
B1b, B1c, B1d, B1e, B1f, B1h, B2d, B2e, B2f, B2h Non-processing region
C1 Jet

## Claims

1. A cavitation processing method, comprising:
attaching a cap (50) having a through hole (58) to an inlet (21) of a target hole (20e) of a workpiece (10e), the target hole (20e) having the inlet (21) and an opening (24);
closing the opening (24) with a closing body (1), wherein the closing body (1) includes an obstruction body (3) configured to obstruct a flow of a jet of a processing liquid, the obstruction body (3) located downstream from a processing region (A1e) in the flow direction of the jet;
immersing the workpiece (10e) and a nozzle (102) into the processing liquid;
ejecting the jet of the processing liquid from the nozzle (102) located outside of the target hole (20e) to an inside of the target hole (20e) through the through hole (58) such that a cavitation process is performed on the processing region (A1e) that is located downstream of a non-processing region (B1e, B2e) covered by the cap (50) on an inner surface of the target hole (20e); **characterised by**
moving the obstruction body (3) along a flow direction of the jet.

2. The cavitation processing method according to claim 1, wherein
the nozzle (102) has an outer diameter larger than an inner diameter of the inlet (21).

3. The cavitation processing method according to any one of claims 1 to 2, wherein
the inlet (21) includes a female thread portion (25) partially in the non-processing region (B1e), and
the cap (50) includes a male thread portion (51) configured to be screwed into the female thread portion (25).

4. A cavitation processing apparatus (100) configured to perform a cavitation process on a workpiece (10e) having a target hole (20e) having an inlet (21) and an opening (24), the cavitation processing apparatus (100) comprising:
a cap (50) attached to the inlet (21), the cap (50) including,
a head portion (52), and
a through hole (58) configured to penetrate the head portion (52);
a closing body (1) configured to close the opening (24), wherein the closing body (1) includes an obstruction body (3) located downstream from a processing region in a flow direction of a jet, the obstruction body (3) configured to obstruct a flow of the jet;
a nozzle (102) located outside the target hole (21), the nozzle (102) configured to eject the jet of processing liquid through the through hole (58) to an inside of the target hole (20e); and
a tank (101) configured to store the processing liquid for immersing the workpiece (10e) with the cap (50) and the nozzle (102); **characterised in that** the head portion (52) has a male thread portion (51), and **in that**
the obstruction body (3) is movable along the flow direction of the jet.

5. The cavitation processing apparatus (100) according to claim 4, wherein
the cap (50) includes a cover portion (53) configured to cover a non-processing region (B2e) on an inner surface of the target hole (20e).

6. The cavitation processing apparatus (100) according to claim 4 or 5, wherein
the nozzle (102) has an outer diameter larger than an inner diameter of the inlet (21).

## Patentansprüche

1. Kavitationsbearbeitungsverfahren, das aufweist:
Anbringen einer Kappe (50) mit einem Durchgangsloch (58) an einem Einlass (21) eines Ziellochs (20e) eines Werkstücks (10e), wobei das Zielloch (20e) den Einlass (21) und eine Öffnung (24) aufweist;
Verschließen der Öffnung (24) mit einem Verschlusskörper (1), wobei der Verschlusskörper (1) einen Hinderniskörper (3) aufweist, der konfiguriert ist,
einen Strahl einer Bearbeitungsflüssigkeit zu behindern, wobei sich der Hinderniskörper (3) in Strömungsrichtung des Strahls stromabwärts von einem Bearbeitungsbereich (A1e) befindet;
Eintauchen des Werkstücks (10e) und einer Düse (102) in die Bearbeitungsflüssigkeit;
Ausstoßen des Strahls der Bearbeitungsflüssigkeit aus der Düse (102), die sich außerhalb des Ziellochs (20e) befindet, in das Innere des Ziellochs (20e) durch das Durchgangsloch (58), so dass ein Kavitationsprozess an dem Bearbeitungsbereich (A1e) durchgeführt wird, der sich stromabwärts von einem Nicht-Bearbeitungsbereich (B1e, B2e) befindet, der von der Kappe (50) auf einer Innenfläche des Ziellochs (20e) abgedeckt ist; **gekennzeichnet durch** Bewegen des Hinderniskörpers (3) entlang einer Strömungsrichtung des Strahls.

2. Kavitationsbearbeitungsverfahren nach Anspruch 1, wobei
die Düse (102) einen Außendurchmesser hat, der größer ist als ein Innendurchmesser des Einlasses (21).

3. Kavitationsbearbeitungsverfahren nach einem der Ansprüche 1 bis 2, wobei der Einlass (21) einen Innengewindeabschnitt (25) aufweist, der sich teilweise im Nicht-Bearbeitungsbereich (B1e) befindet, und
die Kappe (50) einen Außengewindeabschnitt (51) aufweist, der konfiguriert ist, in den Innengewindeabschnitt (25) eingeschraubt zu werden.

4. Kavitationsbearbeitungsvorrichtung (100), die konfiguriert ist, einen Kavitationsprozess an einem Werkstück (10e) durchzuführen, das ein Zielloch (20e) mit einem Einlass (21) und einer Öffnung (24) aufweist, wobei die Kavitationsbearbeitungsvorrichtung (100) aufweist:
eine Kappe (50), die an dem Einlass (21) angebracht ist, wobei die Kappe (50) aufweist:
einen Kopfabschnitt (52) und
ein Durchgangsloch (58), das so konfiguriert ist, dass es den Kopfabschnitt (52) durchdringt;
einen Verschlusskörper (1), der konfiguriert ist, die Öffnung (24) zu verschließen, wobei der Verschlusskörper (1) einen Hinderniskörper (3) aufweist, der sich in Strömungsrichtung eines Strahls stromabwärts von einem Bearbeitungsbereich befindet, wobei der Hinderniskörper (3) konfiguriert ist,
eine Strömung des Strahls zu behindern,
eine Düse (102), die sich außerhalb des Ziellochs (21) befindet, wobei die Düse (102) konfiguriert ist, den Strahl der Bearbeitungsflüssigkeit durch das Durchgangsloch (58) in das Innere des Ziellochs (20e) auszustoßen; und
einen Tank (101), der konfiguriert ist, die Bearbeitungsflüssigkeit zum Eintauchen des Werkstücks (10e) mit der Kappe (50) und der Düse (102) zu speichern; **dadurch gekennzeichnet, dass**
der Kopfabschnitt (52) einen Außengewindeabschnitt (51) aufweist, und dass der Hinderniskörper (3) entlang der Strömungsrichtung des Strahls beweglich ist.

5. Kavitationsbearbeitungsvorrichtung (100) nach Anspruch 4, wobei die Kappe (50) einen Abdeckabschnitt (53) aufweist, der konfiguriert ist, einen Nicht-Bearbeitungsbereich (B2e) auf einer Innenfläche des Ziellochs (20e) abzudecken.

6. Kavitationsbearbeitungsvorrichtung (100) nach Anspruch 4 oder 5, wobei die Düse (102) einen Außendurchmesser aufweist, der größer ist als der Innendurchmesser des Einlasses (21).

## Revendications

1. Procédé de traitement par cavitation, comprenant :
la fixation d'un capuchon (50) ayant un trou traversant (58) à une entrée (21) d'un trou cible (20e) d'une pièce (10e), ledit trou cible (20e) comportant l'entrée (21) et une ouverture (24) ;
l'obturation de l'ouverture (24) avec un corps de fermeture (1), le corps de fermeture (1) comprenant un corps d'obstruction (3) prévu pour stopper l'écoulement d'un flux d'un liquide de traitement, ledit corps d'obstruction (3) étant situé en aval d'une zone de traitement (A1e) dans la direction d'écoulement du flux ;
l'immersion de la pièce (10e) et d'une buse (102) dans le liquide de traitement ; la projection du flux du liquide de traitement par la buse (102) située à l'extérieur du trou cible (20e) vers l'intérieur du trou cible (20e) à travers le trou de passage (58), de manière à exécuter un processus de cavitation sur la zone de traitement (A1e) située en aval d'une zone de non-traitement (B1e, B2e) couverte par le capuchon (50) sur une surface intérieure du trou cible (20e) ;
**caractérisé par**
le déplacement du corps d'obstruction (3) dans la direction d'écoulement du flux.

2. Procédé de traitement par cavitation selon la revendication 1, où
la buse (102) a un diamètre extérieur supérieur au diamètre intérieur de l'entrée (21).

3. Procédé de traitement par cavitation selon la revendication 1 ou la revendication 2, où
l'entrée (21) comprend une partie filetée femelle (25) partiellement dans la zone de non-traitement (B1e), et
le capuchon (50) comprend une partie filetée mâle (51) prévue pour être vissée dans la partie filetée femelle (25).

4. Dispositif de traitement par cavitation (100) prévu pour effectuer un processus de cavitation sur une pièce (10e) ayant un trou cible (20e) comportant une entrée (21) et une ouverture (24), ledit dispositif de traitement par cavitation (100) comprenant :
un capuchon (50) fixé à l'entrée (21), ledit capuchon (50) présentant
une partie de tête (52), et
un trou traversant (58) prévu pour pénétrer dans la partie de tête (52) ;
un corps de fermeture (1) prévu pour obstruer l'ouverture (24), ledit corps de fermeture (1) comprenant un corps d'obstruction (3) situé en aval d'une zone de traitement dans la direction d'écoulement d'un flux, le corps d'obstruction (3) prévu pour obstruer un écoulement du flux,
une buse (102) située à l'extérieur du trou cible (21), ladite buse (102) étant prévue pour projeter le flux de liquide de traitement par le trou de passage (58) vers l'intérieur du trou cible (20e) ; et
un réservoir (101) prévu pour stocker le liquide de traitement, pour l'immersion de la pièce (10e) avec le capuchon (50) et la buse (102) ;
**caractérisé en ce que**
la partie de tête (52) présente une partie filetée mâle (51), et **en ce que** le corps d'obstruction (3) est déplaçable dans la direction d'écoulement du flux.

5. Dispositif de traitement par cavitation (100) selon la revendication 4, où le capuchon (50) comprend une partie de couverture (53) prévue pour couvrir une zone de non-traitement (B2e) sur une surface intérieure du trou cible (20e).

6. Dispositif de traitement par cavitation (100) selon la revendication 4 ou la revendication 5, où
la buse (102) a un diamètre extérieur supérieur au diamètre intérieur de l'entrée (21).
